Europäisches Patentamt

European Patent Office

Office européen des brevets

(11) Publication number: 0 263 623 B1

# EUROPEAN PATENT SPECIFICATION

(45) Date of publication of patent specification: 29.01.92

(51) Int. Cl.⁵: **B32B 17/10**, C03C 27/12, B60J 1/20, H05B 3/00

(21) Application number: 87308455.2

(22) Date of filing: 24.09.87

(54) Method of improving the adhesion between a coating on a glass article and a polyvinyl butyral material.

(30) Priority: 06.10.86 US 915835

(43) Date of publication of application:
13.04.88 Bulletin 88/15

(45) Publication of the grant of the patent:
29.01.92 Bulletin 92/05

(84) Designated Contracting States:
DE FR GB

(56) References cited:
EP-A- 0 076 496

(73) Proprietor: FORD MOTOR COMPANY LIMITED
Eagle Way
Brentwood Essex CM13 3BW(GB)
(84) Designated Contracting States:
GB

Proprietor: FORD-WERKE AKTIENGESELL-
SCHAFT
Werk Köln-Niehl Henry-Ford-Strasse Post-
fach 60 40 02
W-5000 Köln 60(DE)

(84) Designated Contracting States:
DE

Proprietor: FORD FRANCE SOCIETE AN-
ONYME
344 Avenue Napoléon Bonaparte B.P. 307
F-92506 Rueil Malmaison Cedex(FR)
(84) Designated Contracting States:
FR

(72) Inventor: Pharms, Eurene Paul
7057 Niagara Apt.134
Romulus Michigan 48174(US)
Inventor: Amberger, Charles James
370 Rayson
Northville Michigan 48167(US)
Inventor: Hymore Ronald Ray
7815, Fir Drive
Temperance, Michigan 48182(US)

(74) Representative: Messulam, Alec Moses et al
A. Messulam & Co. 24 Broadway
Leigh on Sea Essex SS9 1BN(GB)

## Description

This invention relates to a method of improving the adhesion between a coating on a glass article and a polyvinyl butyral material. In particular, this application is directed to a method of improving the adhesion between an electrically conductive coating on a glass vision unit and a polyvinyl butyral material.

The electrically conductive coating in a glass vision unit is generally transparent for radiation in the visible wave length band. Such glass vision units can be utilised as electrically conductive windshields which are known in today's automotive market. The electrically conductive windshields are manufactured from two glass templates, the outer one of which faces the outside of the vehicle and the inner one of which faces the inside of the vehicle. The two glass templates are laminated together to form a windshield by utilisation of a polyvinyl butyal interlayer. The laminating of the glass and the vinyl material is known in the art and no further discussion thereof will be undertaken herein.

In an electrically heated windshield (EHW), the surface of the outer glass template in contact with the polyvinyl butyral interlayer has an electrically conductive coating thereon. A preferred coating for an EHW is actually a three-layer coating consisting of an initial layer of zinc oxide, a middle layer of silver, and a third layer of zinc oxide. The electrically conductive coating is connected to appropriate bus bars as, for example, is shown in US Patent 4,543,466, which issued on September 24 1985, entitled "Bus Bar Arrangement for Uniformly Heating a Trapezoidally-Shaped Electrically heated Windshield".

According to the present invention there is provided a method of improving the adhesion between a coating on a glass article and a polyvinyl butyral material which comprises the steps of subjecting the coating on the glass article to a coating operation in which a thin layer consisting essentially of chromium metal and chromium oxides is placed thereover "chromium oxide coating" and bonding said chromium oxide coated glass article to the polyvinyl butyral material in a bonding operation employing heat and pressure.

A preferred method of carrying out the invention is one wherein the method is employed to improve the adhesion between an electrically conductive coating on a glass vision unit and the vinyl material. Such an electrically conductive coating is generally transparent to radiation in the visible wave length range and is placed on a glass vision unit such as a vehicle windshield to form an electrically heated windshield for the vehicle. In carrying out this method, the electrically conductive coating forming the electrically heated windshield is subjected to a coating operation in which a thin layer of chromium oxide is placed over the electrically conductive coating. Preferably the thin layer of chromium oxide is a layer which is a complex of chromium metal and chromium oxides ($CrO$, $CrO_2$, $CrO_3$ and $Cr_2O_3$). Once the electrically conductive coating has been coated with the chromium oxide layer, the chromium oxide coated electrically heated windshield is bonded to the polyvinyl butyral material in a bonding operation employing heat and pressure. In accordance with preferred teachings, the method forming an electrically heated windshield is carried out by the application of a chromium oxide layer having a thickness from about 2.5 nm to about 10 nm (25 angstroms to about 100 angstroms).

In accordance with still further additional teachings of the method of the invention, the electrically conductive coating on the glass vision is a three-layer coating. The first layer of the coating is zinc oxide, the intermediate layer is a silver coating, and the third layer is once again a zinc oxide coating. Thus, the thin layer of chromium oxide in the preferred embodiment is placed over a layer of zinc oxide which forms the upper layer of the electrically conductive coating on the glass vision unit.

The invention will now be further described by way of example with reference to the accompanying drawings in which:

Figure 1 is a schematic representation of an electrically heated windshield in which the method of the invention is practiced in order to improve the adhesion between an electrically conductive coating on the windshield and a polyvinyl butyral material; and

Figure 2 is a cross-sectional view taken along line II-II of Figure 1 showing the various elements making up the windshield.

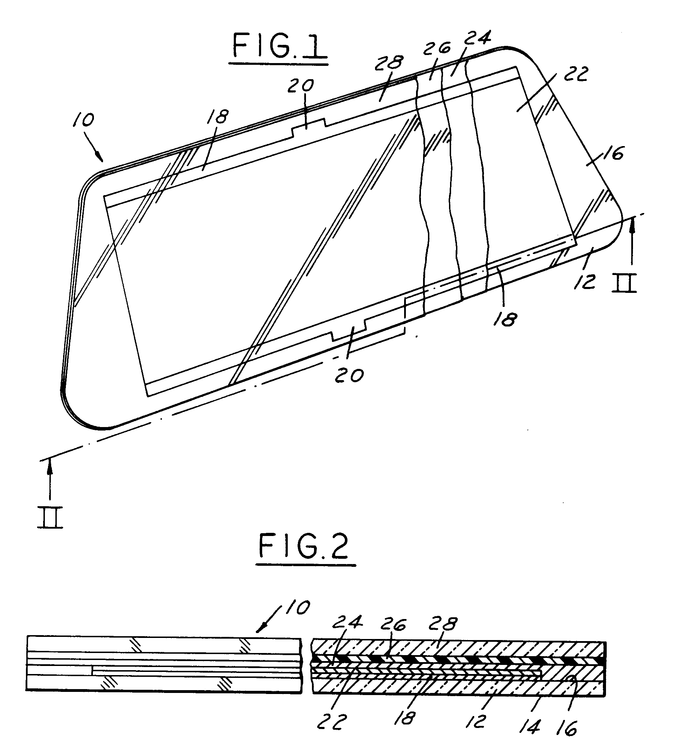

In Figure 1 there is shown electrically heated windshield, generally identified by the numeral 10, as manufactured utilising the teachings of the method of the invention. In accordance with the preferred teachings, an outer glass template 12 is provided which forms the outside of the electrically heated windshield 10. This outer glass template has an outwardly facing surface 14 and an inwardly facing surface 16 shown only in Figure 2. The outwardly facing surface 14 forms the outer surface of the electrically heated windshield 10. The outer glass template has a thickness of about 0.1778 cm (0.070 inch) and is formed from a soda/line glass in a known glass forming operation. The glass template may be bent if it is desired to have a curved windshield. Since the bending of glass templates is well known in the art, no further discussion thereof will be undertaken herein.

An electrically conductive coating and bus bars for the electrically heated windshield 10 of this invention in its preferred embodiment are applied to the inwardly facing surface 16 of the outer glass template 12. In this case, bus bars 18-18 and terminal areas 20-20 are made from a silver ceramic material as is well known in the art. Generally, the silver ceramic in a suitable vehicle is silk screen printed on the inwardly facing surface 16 of the outer glass template 12 and then heated so as to bond the silver ceramic material to the glass and drive off the vehicle, thereby forming the bus bars 18-18 and the terminal areas 20-20. The silver ceramic areas generally have a thickness of 0.00254 cm (0.001 inch).

The next coating applied to the inwardly facing surface 16 of the outer glass template 12 is a conductive coating 22. The conductive coating overlies and extends between the bus bars 18-18 over a great majority of the surface area of the outer glass template 12. The electrically conductive coating is preferably applied by a magnetron sputtering operation. This coating normally has a thickness of $1.016 \times 10^{-6}$ cm ($0.4 \times 10^{-6}$ inch) and in accordance with the teachings of this preferred embodiment of the invention, the materials used as target materials in the magnetron sputtering device are zinc and silver. The resulting coating which is applied to the windshield is a multi-layer coating consisting of a layer of zinc oxide, a layer of silver, followed by a layer of zinc oxide, which forms a coating which is electrically conductive. By electrically conductive, we mean that an electrical current, either AC or DC, can be passed across the silver coating. Electrical leads, not shown, are bonded to the terminal areas 20-20 so that the electrical energy may be applied to the conductive coating 20.

In accordance with the teachings of this invention, the adhesion between the conductive coating 22 and a layer of polyvinylbutyral material is improved by coating the conductive coating 22 with a thin layer of chromium oxide 24. Preferably, this coating is applied by a magnetron sputter coating operation which is carried out in a five micrometre oxygen atmosphere. This coating operation may be carried out right after the conductive coating is placed on the inwardly facing surface 16 of the outer glass template. By a chromium oxide layer, we mean a layer which consists essentially of chromium metal and chromium oxides ($CrO$, $CrO_2$, $CrO_3$ and $Cr_2O_3$).
Generally, this layer has a thickness of a range from about 2.5 nm to about 10 nm (25 angstroms to about 100 angstroms), which is in a range from $1 \times 10^{-7}$ inch to about $4 \times 10^{-7}$ inch. The chromium oxide layer 24 preferably covers all of the conductive coating 22 but it may, in fact, cover over the entire inwardly facing surface of the outer glass template. If desired, the chrome oxide coating may be applied by other means such as chemical vapor deposition, electron beam evaporation, or combinations thereof as known in the art.

The exact composition of the chrome oxide layer is not critical. As long as the layer consists essentially of chromium metal and the chromium oxides discussed above in some relative proportion to one another, the chromium oxide layer is effective to increase the adhesion between polyvinyl butyral material thereto.

In finishing the electrically heated windshield 10, a layer of polyvinyl butyral material 26, having a thickness of about 0.030 inches is laid against the chrome oxide layer 24 and an inner glass template 28 is laid thereover. The bonding of the inner glass template 28 and the polyvinyl butyral interlayer 26 to the chrome coating 24 and associated layers on the outer glass template 12 is carried out in a bonding operation which employs heat and pressure. As is well known in the art, the bonding operation employs heat and pressure which cures the polyvinyl butyral material and makes it transparent.

Suitable bonding operations may be carried out in oil or air autoclaves in which the autoclaving material is heated to a temperature in the range of 138-154° C 280-310° F and a pressure in the range from 1.378-2.068 MPa (200-300 lbs. per square inch). Generally, these higher pressures are applied for a period of 10-20 minutes during an autoclaving cycle which takes 45-60 minutes. Skilled artisans are aware of the autoclaving of laminated windshields. The method of our invention for improving the adhesion between a coating on a glass article and a polyvinyl butyral are intended to be carried out with normal autoclaving procedures.

The degree of improvement of the adhesion between the polyvinyl butyral material to a surface of a glass article having a coating thereon, such as a transparent and electrically conductive coating, is demonstrated in the following test procedure.

The test procedure carried out is a so-called pummel test. In this test, a glass sample which has been laminated is soaked at -17.8° C (0° F) for a period of about two hours. The so-treated sample is then removed and subjected to a constant pummeling by means of a hydraulic hammer. In this test, if all of the glass falls off of the polyvinyl butyral material, a reading of "0" is given to the test sample. If all of the glass is retained in bonding contact with the polyvinyl butyral material, a "10" is given to the test sample.

When this pummel test was carried out on test samples where the polyvinyl butyral material was not laminated against a chromium oxide layer 24 but rather was laminated directly to the conductive coating 22, the test samples registered a score in a range from 2.5-3.0 on this test. Identical samples processed in the same manner, but for the fact that the surface brought into contact with the transparent and elecrically conductive film 22 was subjected to a chromium coating 24, resulted in test results in a range from 6-8. This showed us that there was a dramatic improvement in the adhesion between polyvinyl butyral laminated against the chromium oxide coating than when no such chromium oxide coating was present.

For example, the method of this invention may be used to make coated laminated glass for architectural purposes. Such glass has a coating thereon for solar control purposes and is laminated to increase its strength.

## Claims

1. A method of improving the adhesion between a coating on a glass article and a polyvinyl butyral material which comprises the steps of subjecting the coating on the glass article to a coating operation in which a thin layer consisting essentially of chromium metal and chromium oxides is placed thereover "chromium oxide coating" and bonding said chromium oxide coated glass article to the polyvinyl butyral material in a bonding operation employing heat and pressure.

2. A method as claimed in Claim 1, in which said layer consisting essentially of chromium metal and chromium oxides has a thickness from 2.5 nm to 10 nm (25 angstroms to 100 angstroms).

3. A method as claimed in Claim 1 or 2, in which said glass article is a glass vision unit and said coating on the vision unit is a transparent and electrically conductive coating.

4. A method as claimed in Claim 3, in which bus bars are placed together with said conductive coating on a first glass sheet of said glass vision unit, and in said bonding operation a second glass sheet is bonded to said first glass sheet, the polyvinyl butyral material being interposed between said chromium, oxide coating on said first glass sheet and said second glass sheet.

## Revendications

1. Procédé pour améliorer l'adhérence entre un revêtement sur un article en verre et un matériau de polybutyrale de vinyle qui comprend les opérations consistant à soumettre le revêtement sur l'article en verre à une opération de revêtement et dans laquelle une couche mince qui est constituée essentiellement de chrome et d'oxydes de chrome est placée sur celui-ci en tant que "revêtement d'oxyde de chrome" et à souder ledit article en verra revêtu de l'oxyde de chrome au matériau de polybutyrale de vinyle dans une opération de soudure faisant usage de la chaleur et de la pression.

2. Procédé selon la revendication 1, dans lequel ladite couche qui est constituée essentiellement de chrome et d'oxydes de chrome présente une épaisseur de 2,5 nm à 10 nm (25 Å à 100 Å).

3. Procédé selon la revendication 1 ou 2, dans lequel ledit article en verre est une unité de vision en verre et ledit revêtement sur l'unité en verre est un revêtement transparent et électriquement conducteur.

4. Procédé selon la revendication 3, dans lequel des barres collectrices sont placées ensemble avec ledit revêtement conducteur sur une première feuille de verre de ladite unité de vision en verre, en ce que dans ladite opération de soudure, une seconde feuille an verre est soudée à ladite première feuille en verre, le matériau de polybutyrale de vinyle étant interposé entre ledit revêtement d'oxyde de chrome sur ladite première feuille en verra et ladite seconde fauille en verre.

## Patentansprüche

1. Verfahren zur Verbesserung der Haftung zwischen einem Überzug auf einem Artikel aus Glas und einem Material aus Polyvinylbutyral, wobei das Verfahren aus den folgenden Schritten besteht: Durchführung eines Beschichtungsvorganges mit dem Überzug auf dem Artikel aus Glas, bei dem eine dünne, im wesentlichen aus metallischem Chrom und Chromoxiden bestehende Schicht darauf aufgebracht ["Chromoxidüberzug"] und jener mit Chromoxid beschichteter Artikel aus Glas mit dem Material aus Polyvinylbutyral in einem Klebevorgang unter Anwendung von Hitze und Druck verklebt wird.

2. Verfahren nach Anspruch 1, bei dem jene, im wesentlichen aus metallischem Chrom und Chromoxiden bestehende Schicht eine Stärke von 2,5 nm bis 10 nm (25 Angstrom bis 100 Angstrom) aufweist.

3. Verfahren nach Anspruch 1 oder 2, bei dem es sich bei jenem Artikel aus Glas um eine Sichteinheit aus Glas handelt und jener Überzug auf der Sichteinheit einen durchsichtigen und elektrisch leitenden Überzug darstellt.

4. Verfahren nach Anspruch 3, bei dem Stromschienen zusammen mit jenem leitenden Überzug auf eine erste Glasplatte jener Sichteinheit aus Glas gelegt werden und in jenem Verklebevorgang eine zweite Glasplatte mit jener ersten Glasplatte verklebt wird, wobei das Material aus Polyvinylbutyral zwischen jenem Überzug aus Chromoxid auf jener ersten Glasplatte und jener zweiten Glasplatte zu liegen kommt.

FIG.1

FIG.2